# EUROPEAN PATENT SPECIFICATION

(11) **EP 2 326 085 B1**
(45) Date of publication and mention of the grant of the patent: **20.06.2012**
(21) Application number: 10179070.7
(22) Date of filing: 23.09.2010
(51) Int. Cl.: H04N 5/913, H04N 5/782, H04N 21/4402, H04N 21/4405, H04N 21/4408

(54) **Signal processing device and signal processing method**
Vorrichtung und Verfahren zur Signalverarbeitung
Dispositif et procédé de traitement de signal

(30) Priority: 29.10.2009 JP 2009248831
(43) Date of publication of application: 25.05.2011
(73) Proprietor: Kabushiki Kaisha Toshiba, Minato-ku Tokyo 105-8001 (JP)
(72) Inventor: Kazuyo, Kuroda, Tokyo 105-8001 (JP)
(74) Representative: Henkel, Breuer & Partner

(56) References cited:
- EP-A2- 1 657 926
- JP-A- 2006 101 406
- US-A1- 2003 097 575
- US-A1- 2003 156 716
- US-A1- 2004 109 563

## Description

Embodiments described herein relate generally to a technique for recording/reproducing a broadcast signal in a signal processing device.

As is well known, digitization of television broadcasts has been promoted recently. For example in Japan, terrestrial digital broadcasts have started in addition to satellite digital broadcasts, such as broadcasting satellite (BS) digital broadcasts and 110-degree communication satellite (CS) digital broadcasts. Further, internet protocol (IP) broadcasts are distributed through a network.

Such digital broadcast data for these broadcasts is encrypted on transfer paths. Upon receiving broadcast data, the signal processing device decrypts broadcast data during a recording processing. The signal processing device encrypts decrypted broadcast data and records the decrypted broadcast data into a storage device. The signal processing device decrypts the broadcast data encrypted in the reproducing processing.

Jpn. Pat. Appln. KOKAI Publication No. 2006-101406 discloses a configuration in which a decode processing is efficiently performed by switching performing of a decode processing on all encryption screens and skipping of a decode processing of a part of each encryption screen, in accordance with processing load in the information processing device during a reproducing processing of a video image.

A general architecture that implements the various embodiments of the invention will now be described with reference to the drawings. The drawings and the associated descriptions are provided to illustrate the embodiments and not to limit the scope of the invention.

EP 1 657 926 A2 discloses an information processing apparatus. Herein, when broadcasting program data is input from a digital TV broadcasting reception processing unit, an encryption device decrypts and re-encrypts the broadcasting program data using a first system to output thus decrypted and re-encrypted data to a PCI bus, and when broadcasting program data is input from an analog TV broadcasting reception processing unit, the encryption device decrypts and re-encrypts the broadcasting program data using a second system to output thus decrypted and re-encrypted data to the PCI bus.
FIG. 1 is an exemplary block diagram schematically representing a signal processing according to the first embodiment;
FIG. 2 is an exemplary block diagram schematically representing a recording processing and a reproducing processing according to the first embodiment;
FIG. 3 is an exemplary table describing a format of a recorded data table according to the first embodiment;
FIG. 4 is an exemplary table describing content of the recorded data table according to the first embodiment;
FIG. 5 is an exemplary flowchart representing a processing in the signal processing device according to the first embodiment;
FIG. 6 is an exemplary flowchart representing an ordinary processing according to the first embodiment;
FIG. 7 is an exemplary flowchart representing a recording processing according to the first embodiment;
FIG. 8 is an exemplary flowchart representing a reproducing processing according to the first embodiment;
FIG. 9 is an exemplary flowchart representing a reproducing processing according to the second embodiment;
FIG. 10 is an exemplary block diagram schematically representing a signal processing device according to the third embodiment; and
FIG. 11 is an exemplary flowchart representing a reproducing processing according to the third embodiment.

Various embodiments will be described hereinafter with reference to the accompanying drawings.

In general, according to one embodiment, a signal processing device includes an obtaining module, a measurement module, and a first determination module. The obtaining module is configured to obtain first broadcast data encrypted by a first encryption processing. The measurement module is configured to measure processing load of the signal processing device during a recording processing on the first broadcast data. The first determination module is configured to determine whether decryption is to be performed by a first decryption processing, for each region of the first broadcast data, on the basis of the processing load.

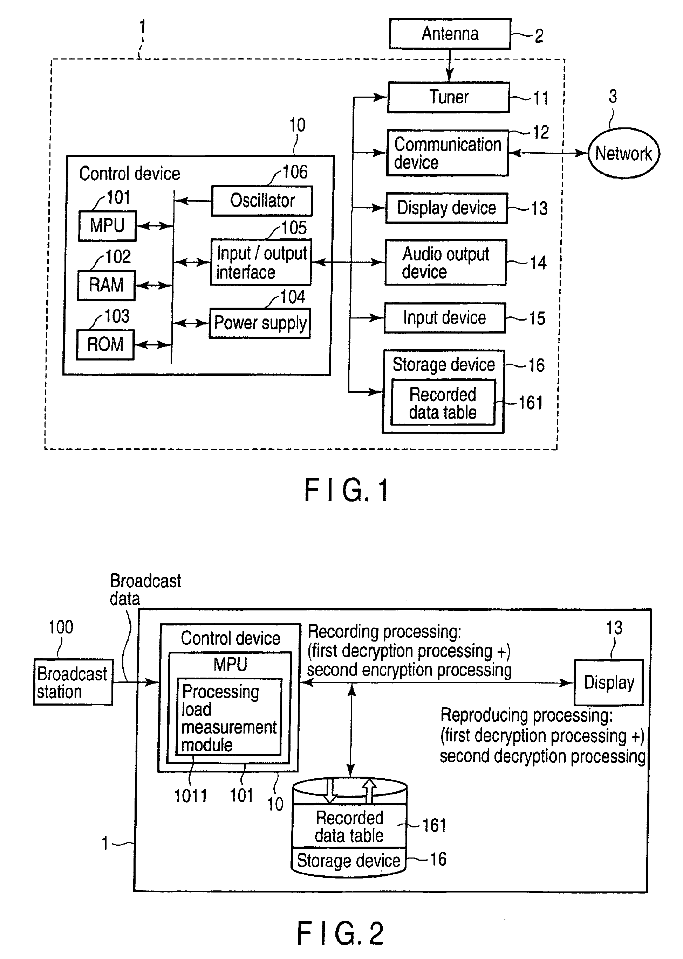

Hereinafter, embodiments will be described in details with reference to the drawings. FIG. 1 is a block diagram illustrating an entire configuration of a system comprising a signal processing device 1 according to the first embodiment. The signal processing device 1 is, for example, a television receiver or a recording/reproducing device. The signal processing device 1 comprises: a control device 10; a tuner 11; a communication device 12; a display device 13; an audio output device 14; an input device 15; and a storage device 16.

The control device 10 controls an entire system including the signal processing device 1. A micro processing unit (MPU) 101 controls operations of respective devices. A random access memory (RAM) 102 records programs such as control programs. A read only memory (ROM) 103 stores control programs and control data. A power supply 104 supplies electric power to respective parts of the control device 10. An input/output interface 105 inputs/outputs information to/from respective devices connected to the control device 10. An oscillator 106 sets time of the signal processing device 1 and synchronizes the signal processing device 1 with respective sections.

A tuner 11 demodulates a digital broadcast signal received by an antenna. The communication device 12 transmits/receives required information through a network 3 such as an optical channel. Further, the communication device 12 transmits/receives IP broadcast data through the network. The display device 13 displays various information such as a broadcast program, web information, and a control result, in the signal processing device 1. The audio output device 14 outputs sounds. The input device 15 inputs information specified by a user. The storage device 16 records, for example, broadcast data obtained through the tuner 11 or the communication device 12. Here, the signal processing device 1 is described as having a configuraitno comprising the display device 13 and the storage device 16, which may be connected as external devices.

FIG. 2 is a block diagram which schematically describes a recording processing and a reproducing processing in the signal processing device 1 according to the first embodiment. Broadcast data (first broadcast data) on a transfer path, which is a program to be distributed to the signal processing device 1 through the tuner 11 or the communication device 12 from the broadcast station, has been encrypted. Here, encryption performed on broadcast data on a transfer path is referred to as a first encryption processing. The MPU 101 of the control device 10 includes a processing load measurement module 1011. The processing load measurement module 1011 measures processing load.

The MPU 101 records an obtained program into the storage device 16. In this case, if the MPU 101 determines the processing load of the MPU 101 to be smaller than a constant value, the MPU 101 decrypts all of broadcast data of one program, subjected to the first encryption processing. The MPU 101 records broadcast data (second broadcast data) of all of one program subjected to the first encryption processing, into the storage device 16.

Here, the decryption processing, which is performed on broadcast data by the MPU 101 in correspondence with the first encryption processing, is referred to as a first decryption processing.

If the MPU 101 determines that processing load of the MPU 101 is not smaller than the constant value, the MPU 101 does not perform the first decryption processing on all broadcast data of one program, in the recording processing. The MPU 101 records, into the storage device 16, broadcast data (second broadcast data) in a state in which broadcast data subjected to the first decryption processing and broadcast data not subjected to the first decryption processing are mixed. That is, the MPU 101 varies an amount of broadcast data subjected to the first decryption processing in accordance with the processing load of the MPU 101.

The MPU 101 reflects, on a recorded data table 161, division information (an incomplete-decryption-processing start address N and an incomplete-decryption-processing end address N) indicating to what part of broadcast data of one program the first decryption processing is complete (decrypted region) and to what part thereof the first decryption processing is incomplete (non-decripted region), and stores the data table 161 into the storage device 16. The MPU 101 then stores the division information into a storage device 16.

Further, the MPU 101 performs an encryption processing different from the first encryption processing, on broadcast data, and stores the broadcast data into the storage device 16. Here, the encryption processing performed on broadcast data for recording is referred to as a second encryption processing. Regardless of whether broadcast data has been subjected to the first decryption processing or not, broadcast data, which has been subjected to the second decryption processing and is to be recorded on the storage device 16, is referred to as recorded data.

If the storage device 16 records recorded data subjected to the first decryption processing, the MPU 101 decryps the recorded data during a reproducing processing, and displays the recorded data on the display device 13. Here, the MPU 101 refers to the decryption processing performed on the recorded data, as the second decryption processing which the MPU 101 performs on the recorded data, in correspondence with the second decryption processing.

If the storage device 16 records recorded data in which a region where the first decryption processing has been performed for one program and a rgion where the first decryption processing is not performed are mixed, the MPU 101 performs the second decryption processing on the recorded data. For the region where the first decryption processing is not performed, the first decryption processing is performed and displayed on the display device 13. That is, the MPU 101 performs the first decryption processing on the recorded data on the basis of the recorded data table 161 during the reproducing processing.

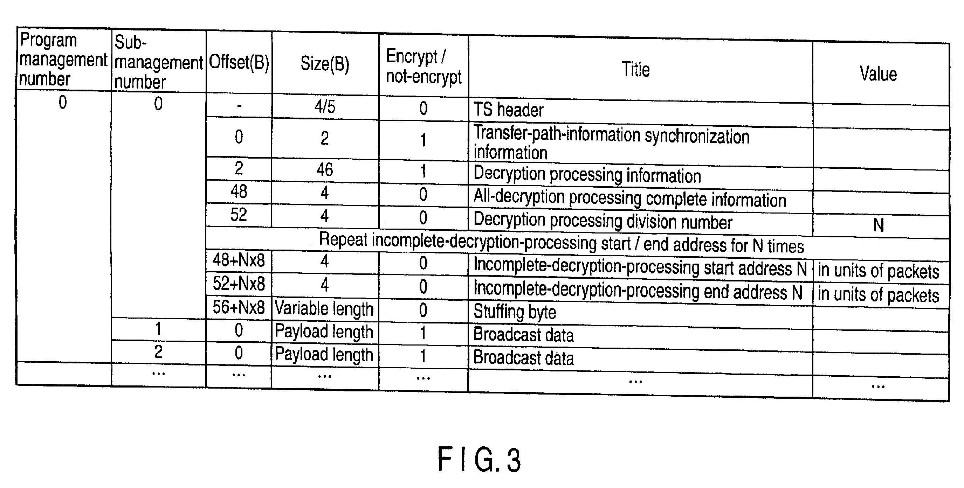

FIG. 3 is a table representing a format of the recorded data table 161. The recorded data table 161 stores various information items in a MPEG (Motion Picture Experts Group) format. An item of program management number represents an identification number which specifies a program. An item of sub-management number represents a TS packet in units of TS packet numbers when a top of a TS (Transport Stream) packet is zero. An item of offset represents offset bytes from the top of a TS payload. An item of size represents a data size in units of bytes.

An item of encrypt/not-encrypt represents whehter the second encryption processing should be performed on broadcast data or not. "1" as the item represents that the second encryption processing should be performed. "0" as the item represents that the second encryption processing should not be performed. An item of title represents an item name for controlling recorded data in one program. An item of value represents a specific value of the item of title. If encryption should be performed, a value corresponding to the item of encrypt/not-encrypt is subjected to the second encryption processing.

An item of transfer-path-information synchronization information stores "0xFFFF" when unused and "0x129A" when used. An item of decryption processing information stores information concerning the first decryption processing performed on broadcast data. An item of all-decryption-processing complete information stores "1" if the first decryption processing is complete for all broadcast data denoted at a corresponding program management number. The item of all-decryption-processing complete information otherwise stores "0". An item of a decryption-processing division number stores a division number of continuous data regions of broadcast data if the first decryption processing is incomplete for broadcast data at a corresponding management number.

The item of incomplete-decryption-processing start address N stores a start address of an n-th data region for bytes equivalent to a TS packet number from the top of the n-th data region, if the decryption processing is incomplete for the first decryption processing for the broadcast data at the corresponding program management number. If the item has a value of 0, this item is invalidated. The item of the incomplete-decryption-processing end address N stores a start address of an n-th data region in broadcast data at the program management nubmer for bytes equivalent to a TS packet number from the top of the n-th data region. If the item has a value of 0, this item is invalidated.

An item of stuffing byte is filled with a value of "0xFF" to satisfy a TS payload. Items of decryption-processing division number, incomplete-decryption-processing start address N, and incomplete-decryption-processng end address N exist only when the item of all-decryption-processing complete information is "0".

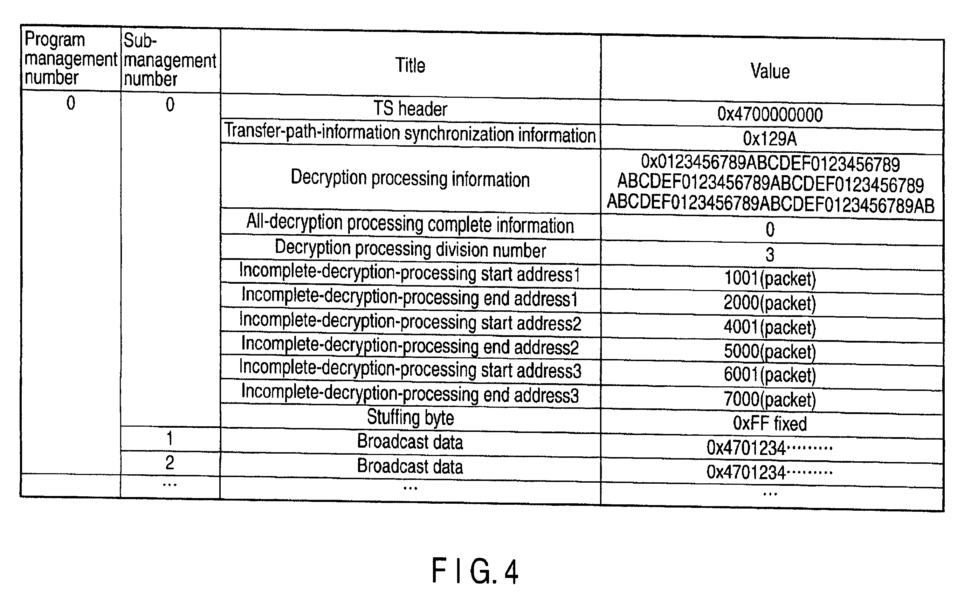

FIG. 4 is a table representing a specific example of a recorded data table 161. The signal processing device 1 records obtained broadcast data of programs as recorded data into the storage device 16. At a program management nubmer 0, the item of the all-decryption-processing complete information is "0". That is, the first decryption processing for broadcast data at the program management nubmer 0 is incomplete. The item of the decryption-processing division number is "3". That is, the first decryption processing is incomplete for consequtive three data regions of the broadcast data at the program management nubmer 0.

Specifically, the first decryption processing is incomplete for broadcast data from packet 1001 as a value of an incomplete-decryption-processing start address 1 to packet 2000 as a value of an incomplete-decryption-processing end address 1. The first decryption processing is incomplete for broadcast data from packet 4001 as a value of an incomplete-decryption-processing start address 2 to packet 5000 as a value of an incomplete-decryption-processing end address 2. The first decryption processing is incomplete for broadcast data from packet 6001 as a value of an incomplete-decryption-processing start address 3 to packet 7000 as a value of an incomplete-decryption-processing end address 2.

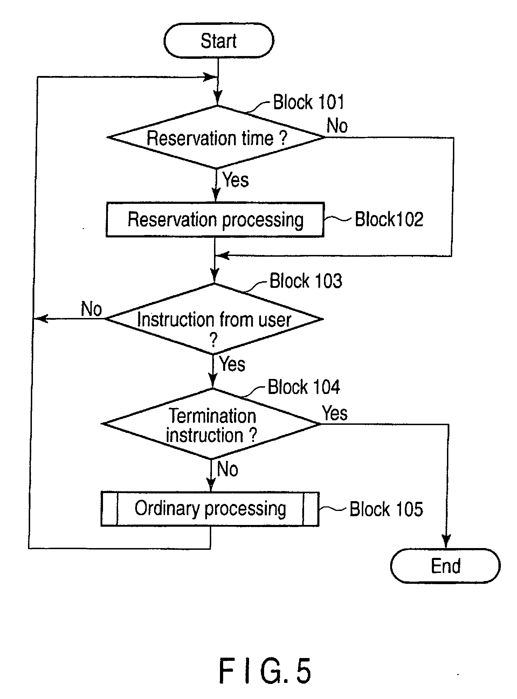

Next, a processing in the signal processing device 1 according to the first embodiment will now be described below. FIG. 5 is a flowchart representng a processing in the signal processing device 1. The MPU 101 operates by a control program as a module, which controls the entire system and is stored in a ROM 103. When the MPU 101 starts up the control program, the MPU 101 then initializes devices connected to the tuner 11, commmunication device 12, display device 13, audio output device 14, and input device 15.

The MPU 101 obtains the current time, and checks whehter or not the current time is a reservation time which is set by a reservation to watch (Block 101). If the current time is a reservation time (Block 101, YES), the MPU 101 starts a reservation processing which has been set (Block 102). If the current time is not a reservation time (Block 101, NO), the MPU 101 waits for, for example, two seconds until an instruction from a user is input by the input device 15 (Block 103).

If an instruction from the user is input (Block 103, YES), the MPU 101 checks whether the instruction from the user is a termination instruction for a reservation processing or not (Block 104). If the instruction is a termination instruction for the reservation processing (Block 104, YES), the MPU 101 terminates the reservation processing in the system including the signal processing device 1, and powers off.

If the instruciton is not a termination instruction for a reservation processing (Block 104, NO), the MPU 101 performs an ordinary processing (Block 105). The ordinary processing in the first embodiment is a recording processing, a reproducing processing for reproducing a program recorded in the storage device 16, or any orhter setting processing for setting a system including the broadcast recording/reproducing device 1 by a user.

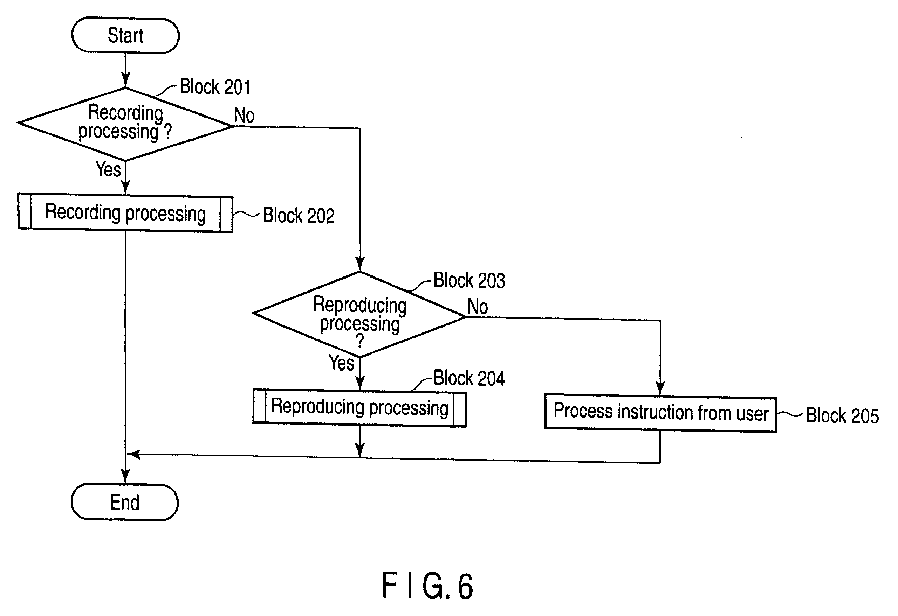

Next, the ordinary processing in Block 105 in FIG. 5 will be described. FIG. 6 is a flowchart representng the ordinary processing. At first, the MPU 101 determines whether start of the recording processing has been input or not (Block 201). If start of the recording processing has been input (Block 201, YES), the MPU 101 starts the recording processing (Block 202). If start of the recording processing has not been input (Block 201, NO), the MPU 101 determines whehter start of the reproducing processing has been input or not (Block 203). If start of the reproducing processing has been input (Block 203, YES), the MPU 101 starts a reproducing processing of a program recorded in the storage device 16 (Block 204). If start of the reproducing processing has not been input (Block 203, NO), the MPU 101 starts a setting processing in the system including the broadcast recording/reproducing device 1 by which a user has made an input (Block 205).

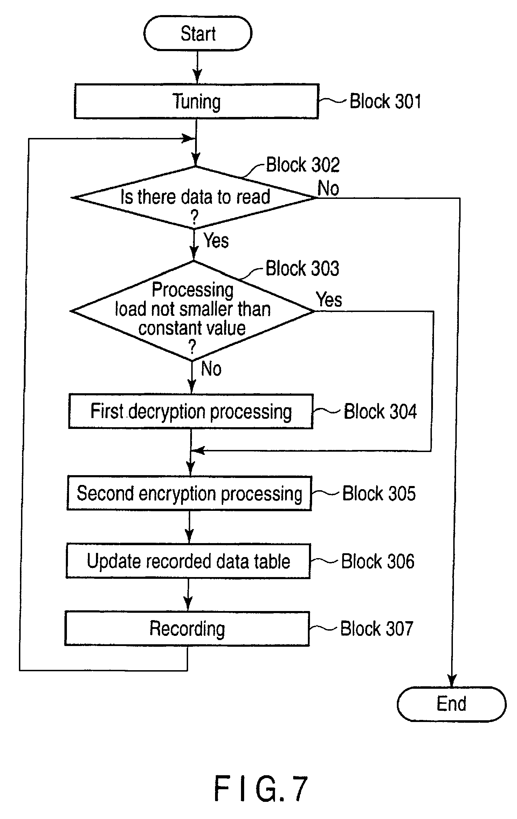

Next, the recording processing in the Block 202 in FIG. 6 will be described. FIG. 7 is a flowchart representng the recording processing. A description will now be made below using a specific example of the recorded data table 161 represented in FIG. 4.

The MPU 101 tunes, by the tuner 11, a broadcast signal of a channel which was selected when the user sets a recording reservation (Block 301). The tuner 11 functinos as an obtaining module. The MPU 101 starts a receiving processing for receiving a program by the tuner 11. The MPU 101 refers to the item of transfer-path-information synchronization information in the recorded data table 161, and sets a program management nubmer "0" corresponding to 0xFFFF (free), as a program management nubmer of broadcast data as a target of the recording processing.

The MPU 101 stores, at first, "0" as a sub-management number of the program management nubmer "0". The MPU 101 stores information concerning the first decryption processing used for broadcast data as a target of the recording processing. The MPU 101 stores, at first, "1" in the item of all decryption-processing-incomplete ifnormation.

The MPU 101 reads broadcast data of a program, for example, in units of 1,000 packets, and subjects the broadcast data to the recording processing. The MPU 101 checks whehter there still is broadcast data to read or not (Block 302). If there is not broadcast data to read (Block 302, NO), the MPU 101 terminates the recording processing.

If there is broadcast data to read (packets 1 to 1000 in the beggining) (Block 302, YES), the MPU 101 measures a usage rate of the MPU 101 in the system of the signal processing device 1 by the processing load measurement module 1011. The processing load measurement module 1011 functions as a measurement module. The MPU 101 determines whehter the usage rate of the MPU 101 is equalt to or higher than a constant value or not (Block 303). The MPU 101 functions as a determination module. Here, a usage rate of 40% of the MPU 101 is a threshold. However, this value is variable. If the usage rate of the MPU 101 is, for example, 20% and is not equalt to or higher than the constant value, the MPU 101 performs the first decryption processing on broadcast data for 1000 packets subjected to the first decryption processing (Block 304). The MPU 101 functions as a decryption module.

Next, the MPU 101 performs the second encryption processing on broadcast data of packets 1 to 1000 (Block 305). The MPU 101 functions as an encryption module. The MPU 101 updates the recorded data table 161 (Block 306), and stores the broadcast data subjected to the second encryption processing, as recorded data in items at sub-management numbers 1 to 1000 in the broadcast data (Block 307). The recorded data table 161 functions as a memory. The MPU 101 returns to the Block 302 and reads broadcast data of packets 1001 to 2000.

If the usage rate of the MPU 101 during a recording processing on broadcast data of packets 1001 to 2000 is, for example, 50% and is not smaller than the constant value or higher (Block 303, YES), the MPU 101 stores "0" into the item of decryption-processing complete information. The recorded data table 161 represents that the first decryption processing on broadcast data at the program management nubmer 0 is incomplete. Further, the MPU 101 stores "1" into the item of decryption-processing division number. Further, the MPU 101 stores 1001, as an offset packet number of a TS packet which has just been read into the item of the incomplete-decryption-processing start address 1.

Next, the MPU 101 performs the second encryption processing on broadcast data from packet 1001 to packet 2000 not subjected to the first decryption processing (Block 305). The MPU 101 updates the recorded data table 161 (Block 306), and stores broadcast data whose items at sub-management numbers 1001 to 2000 have been subjected to the second encryption processing, as recorded data (Block 307). The MPU 101 returns to Block 302 and reads broadcast data of packets 2001 to 3000.

If the usage rate of the MPU 101 is smaller than the constant value during a recording processing of broadcast data of packets 2001 to 3000 (Block 303, NO), the MPU 101 performs the first decryption processing on the broadcast data of packets 2001 to 3000 (Block 304).

The MPU 101 stores 2000 as an offset packet number of a TS packet which has just been read, into the item of incomplete-decryption-processing end address 1 at the program management nubmer 0. Next, the MPU 101 performs the second encryption processing (Block 305) on broadcast data of packets 2001 to 3000 which have been subjected to the first decryption processing (Block 305). The MPU 101 updates the recorded data table 161 (Block 306), and stores, as recorded data, broadcast data whose items at sub-management numbers 2001 to 3000 in the recorded data table 161 have been subjected to the second encryption processing (Block 307). The MPU 101 returns to the Block 302, and reads broadcast data of packets 3001 to 4000.

If the usage rate of the MPU 101 in the recording processing of the broadcast data of packets 3001 to 4000 is smaller than the constant value (Block 303, NO), the MPU 101 performs the first decryption processing on the broadcast data of packets 3001 to 4000 (Block 304).

The MPU 101 performs the second encryption processing on the broadcast data of packets 3001 to 4000 subjected to the first decryption processing (Block 305). The MPU 101 performs the first decryption processing in the same manner as for the broadcast data of packets 2001 to 3000, and therefroe does not update the recorded data table 161 (Block 306). The MPU 101 stores, as recorded data, the broadcast data subjected to the second encryption processing in the items at sub-management numbers 3001 to 4000 in the recorded data table 161 (Block 307). The MPU 101 returns to Block 302, and reads broadcast data of packets 4001 to 5000.

If the usage rate of the MPU 101 in the recording processing of broadcast data of packets 4001 to 5000 is not smaller than the constant value (Block 303, YES), the MPU 101 stores "2" by adding 1 to the item of decryption processing division numbrer. The MPU 101 stores 4001 as an offset packet number of a TS packet which has just been read into the item of the incomplete-decryption-processing start address 2.

Next, the MPU 101 performs the second encryption processing on the broadcast data of packets 4001 to 5000 which have not been subjected to the first decryption processing (Block 305). The MPU 101 updates the recorded data table 161 (Block 306), and stores the broadcast data subjected to the second decryption processing, in items at sub-management numbers 4001 to 5000 in the recorded data table 161 (Block 307). The MPU 101 returns to the Block 302, and reads the broadcast data of packets 5001 to 6000.

If the usage rate of the MPU 101 is smaller than the constant value in the recording processing on the broadcast data of packets 5001 to 6000 (Block 303, NO), the MPU 101 performs the first decryption processing on the broadcast data of packets 5001 to 6000 (Block 304).

The MPU 101 stores 5000 as an offset packet number of a TS packet which has just been read into the item of incomplete-decryption-processing end address 2 at a program management nubmer 0. Next, the MPU 101 performs the second encryption processing on broadcast data of packets 5001 to 6000 subjected to the first decryption processing (Block 305). The MPU 101 updates the recorded data table 161 (Block 306), and stores the broadcast data subjected to the second encryption processing, as recorded data, at items at sub-management numbers of 5001 to 6000 in the recorded data table 161 (Block 307). The MPU 101 returns to Block 302, and reads the broadcast data of packets 6001 to 7000.

If the usage rate of the MPU 101 in the recording processing of broadcast data of packets 6001 to 7000 is not smaller than the constant value (Block 303, YES), the MPU 101 stores "3" by adding 1 to the item of decryption processing division numbrer. The MPU 101 stores 6001 as an offset packet number of a TS packet which has just been read into the item of incomplete-decryption-processing start address 3.

Next, the MPU 101 performs the second encryption processing on broadcast data of packets 6001 to 7000 which have not been subjected to the first decryption processing (Block 305). The MPU 101 updates the recorded data table 161 (Block 306), and stores broadcast data subjected to the second decryption processing at items at the sub-management numbers 6001 to 7000 in the recorded data table 161 (Block 307). The MPU 101 returns to Block 302 and reads the broadcast data of packets 7001 to 8000.

If the usage rate of the MPU 101 in the recording processing of the broadcast data is smaller than (Block 303, NO), the MPU 101 performs the first decryption processing on the broadcast data of packets 7001 to 8000 (Block 304).

The MPU 101 stores 7000 as an offset packet number of the TS packet which has just been read into the item of incomplete-decryption-processing end address 3 at the program management nubmer 0. Next, the MPU 101 performs the second encryption processing on broadcast data of packets 7001 to 8000 subjected to the first decryption processing (Block 305). The MPU 101 updates the recorded data table 161 (Block 306), and stores the broadcast data subjected to the second encryption processing into the items at sub-management numbers 7001 to 8000 in the recorded data table 161 (Block 307). The MPU 101 returns to Block 302, and reads broadcast data of packets 8001 to 9000. If there is no broadcast data to read (Block 302, NO), the MPU 101 terminates the recording processing.

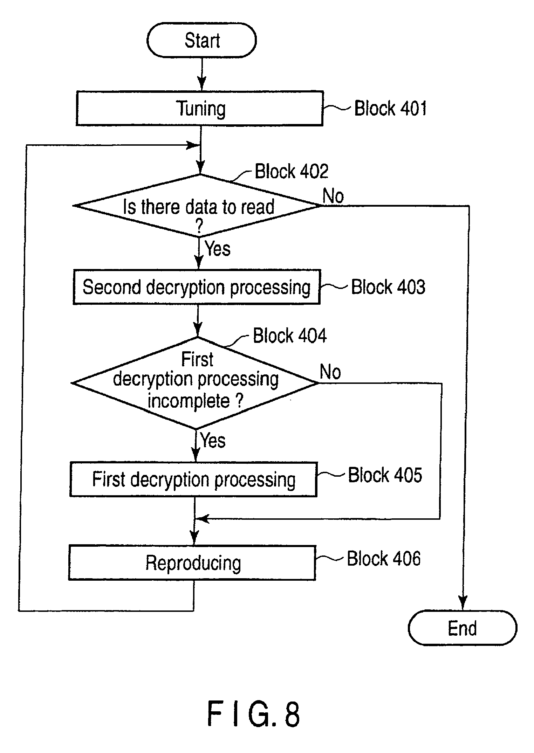

Next, a reproducing processing in Block 204 in FIG. 6 will now be described. FIG. 8 is a flowchart representng the reproducing processing. A description will now be made below with reference to a specific example in the recorded data table 161 in FIG. 4.

The MPU 101 selects recorded data as a target of the reproducing processing selected by a user, from the recorded data table 161 (Block 401). The MPU 101 seelcts the recorded data at the program management nubmer 0.

The MPU 101 refers to the item of all-decryption-processing complete information at the sub-management number 0 at the program management nubmer 0. The MPU 101 determines that the first decryption processing is incomplete for the recorded data at the program management nubmer 0 since the item of all-decryption processing-complete ifnormation is "0". Further, the MPU 101 refers to the item of decryption-processing division number. Here, the MPU 101 confirms that the item of decryption processing processing number is "3". The MPU 101 refers to the item of incomplete-decryption-processing start address 1 and confirms that a value of the item is "1001".

Next, the MPU 101 confirms whether or not recorded data is stored at sub-management numbers 1 to 1000 at the program management nubmer 0 in the recorded data table 161 (Block 402). If no recorded data is stored (Block 402, NO), the MPU 101 terminates the reproducing processing.

If recorded data is stored (Block 402, YES), the MPU 101 reads recorded data at sub-management numbers 1 to 1000, and performs the second decryption processing on the read recorded data (Block 403). The MPU 101 functions as a decryption module. The MPU 101 refers to the incomplete-decryption-processing start address 1 and the incomplete-decryption-processing end address 1, and determines whether or not the first decryption processing is complete for the recorded data at the sub-management numbers 1 to 1000 (Block 404).

Since the item of incomplete-decryption-processing start address 1 is "1001", the MPU 101 determines that the first decryption processing is complete for the recorded data at the sub-management numbers 1 to 1000 (Block 404, NO). The MPU 101 functions as a determination module. Therefore, the MPU 101 reproduces the recorded data at the sub-management numbers 1 to 1000, which has been subjecgted to the second decryption processing, and displays the recorded data on the display device 13 (Block 406). The MPU 101 functions as a reproducing module.

Next, the MPU 101 checks whether or not recorded data is stored at sub-management numbers 1001 to 2000 at the program management nubmer 0 in the recorded data table 161 (Block 402). If recorded data is stored (Block 402, YES), the MPU 101 reads the recorded data at the sub-management numbers 1001 to 2000, and performs the second decryption processing on the recorded data (Block 403). The MPU 101 determines that the first decryption processing is incomplete for the recorded data at the sub-management numbers 1001 to 2000 since the item of incomplete-decryption-processing start address 1 is "1001" and the item of incomplete-decryption-processing end address 1 is "2000" (Block 404, YES). The MPU 101 performs the first decryption processing on the recorded data at the sub-management numbers 1001 to 2000 subjected to the second decryption processing, by referring to the item of decryption-processing information (Block 405). Next, the MPU 101 reproduces recorded data from the sub-management numbers 1001 to 2000, and displays the recorded data on the display device 13 (Block 406).

Next, the MPU 101 checks whether or not recorded data is stored at sub-management numbers 2001 to 3000 at the program management nubmer 0 in the recorded data table 161 (Block 402). If recorded data is stored (Block 402, YES), the MPU 101 reads the recorded data at the sub-management numbers 2001 to 3000, and performs the second decryption processing on the recorded data (Block 403). The MPU 101 determines that the first decryption processing is complete for the recorded data at the sub-management numbers 2001 to 3000 since the item of incomplete-decryption-processing start address 2 is "4001" (Block 404, NO). Therefore, the MPU 101 reproduces the recorded data at the sub-management numbers 2001 to 3000 subjected to the second decryption processing, and displays the recorded data on the display device 13 (Block 406).

Next, the MPU 101 checks whether or not recorded data is stored at sub-management numbers 3001 to 4000 at the program management nubmer 0 in the recorded data table 161 (Block 402). If recorded data is stored (Block 402, YES), the MPU 101 reads the recorded data at the sub-management numbers 3001 to 4000, and performs the second decryption processing on the recorded data (Block 403). The MPU 101 determines that the first decryption processing is complete for the recorded data at the sub-management numbers 3001 to 4000 since the item of incomplete-decryption-processing start address 2 is "4001" (Block 404, NO). Therefore, the MPU 101 reproduces the recorded data at the sub-management numbers 3001 to 4000 subjected to the second decryption processing, and displays the recorded data on the display device 13 (Block 406).

Next, the MPU 101 checks whether or not recorded data is stored at sub-management numbers 4001 to 5000 at the program management nubmer 0 in the recorded data table 161 (Block 402). If recorded data is stored (Block 402, YES), the MPU 101 reads the recorded data at the sub-management numbers 4001 to 5000, and performs the second decryption processing on the recorded data (Block 403). The MPU 101 determines that the first decryption processing is incomplete for the recorded data at the sub-management numbers 4001 to 5000 since the item of incomplete-decryption-processing start address 2 is "4001" and the item of incomplete-decryption-processing end address 2 is "5000" (Block 404, YES). The MPU 101 performs the first decryption processing on the recorded data at the sub-management numbers 4001 to 5000 subjected to the second decryption processing, by referring to the item of decryption processing information (Block 405). Next, the MPU 101 reproduces recorded data from the sub-management numbers 4001 to 5000, and displays the recorded data on the display device 13 (Block 406).

Next, the MPU 101 checks whether or not recorded data is stored at sub-management numbers 5001 to 6000 at the program management nubmer 0 in the recorded data table 161 (Block 402). If recorded data is stored (Block 402, YES), the MPU 101 reads the recorded data at the sub-management numbers 5001 to 6000, and performs the second decryption processing on the recorded data (Block 403). The MPU 101 determines that the first decryption processing is complete for the recorded data at the sub-management numbers 5001 to 6000 since the item of incomplete-decryption-processing start address 3 is "6001" (Block 404, NO). Therefore, the MPU 101 reproduces the recorded data at the sub-management numbers 5001 to 6000 subjected to the second decryption processing, and displays the recorded data on the display device 13 (Block 406).

Next, the MPU 101 checks whether or not recorded data is stored at sub-management numbers 6001 to 7000 at the program management nubmer 0 in the recorded data table 161 (Block 402). If recorded data is stored (Block 402, YES), the MPU 101 reads the recorded data at the sub-management numbers 6001 to 7000, and performs the second decryption processing on the recorded data (Block 403). The MPU 101 determines that the first decryption processing is incomplete for recorded data at the sub-management numbers 6001 to 7000 since the item of incomplete-decryption-processing start address 3 is "6001" and the item of incomplete-decryption-processing end address 2 is "7000" (Block 404, YES). The MPU 101 performs the first decryption processing on the recorded data at the sub-management numbers 6001 to 7000 subjected to the second decryption processing, by referring to the item of decryption processing information (Block 405). Next, the MPU 101 reproduces recorded data from the sub-management numbers 6001 to 7000, and displays the recorded data on the display device 13 (Block 406). If there is no recorded data at the sub-management numbers 7001 to 8000 at the program management nubmer in the recorded data table 161 (Block 402, NO), the MPU 101 terminates the reproducing processing.

According to the first embodiment, when the control device 10 simultaneously receives one or more items of broadcast data, the first decryption processing is then performed on the broadcast data, so as to adapt to processing load of the control device 10. Regions of the broadcast data which have not been subjected to the first decryption processing are recorded on a recorded data table. Therefore, the control device 10 can reduce processing load during the recording processing and can avoid failures in the reception processing or the recording processing.

Further, according to the first embodiment, decryption processing information is stored in the recorded data table. Therefore, the control device 10 performs the first decryption processing only on regions which have not been subjected to the first decryption processing, by referring to the recorded data table in the reproducing processing. Accordingly, recorded data can be properly reproduced.

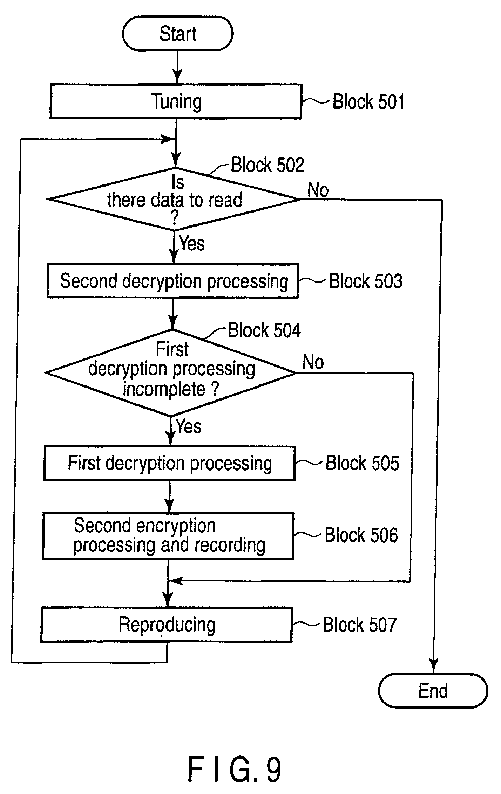

Next, the second embodient will be described. The second embodiment comprises a reproducing processing different from that in the first embodiment. The other processings are the same as those in the first embodiment, and descriptions thereof will be therefore omitted herefrom. FIG. 9 is a flowchart representng a reproducing processing according to the second embodiment. Block 501, 502, 503, 504, 505, and 507 respectively operate in the same manners as Block 401, 402, 403, 404, 405, and 406, and descriptions thereof will therefore be omitted herefrom.

A description will now be made of a case that a MPU 101 reads recorded data at sub-management numbers 1001 to 2000 at a program management nubmer 0 in a recorded data table 161 (Block 502, YES). The MPU 101 performs a second decryption processing on recorded data at sub-management numbers 1001 to 2000 (Block 503). Since the item of incomplete-decryption-processing start address 1 is "1001" and the item of incomplete-decryption-processing terminatino address 1 is "2000", the MPU 101 determines that the first decryption processing is incomplete for recorded data at sub-management numbers 1001 to 2000 (Block 502, YES).

The MPU 101 performs the first decryption processing on recorded data at sub-management numbers 1001 to 2000, which has been subjected to the second decryption processing, by referring to the item of decryption processing information (Block 505). The MPU 101 performs the second encryption processing on the recorded data subjected to the first decryption processing, and stores the recorded data at items at sub-management numbers 1001 to 2000. The MPU 101 stores "0" at items of incomplete-decryption-processing start address 1 and incomplete-decryption-processing end address 1 in the recorded data table 161. Further, the MPU 101 stores "2" obtained by reducing one from "3", at the item of decryption-processing division number (Block 506). Next, the MPU 101 reproduces recorded data at sub-management numbers 1001 to 2000, and displays the recorded data on the display device 13 (Block 507).

A description will now be made of a case that the MPU 101 reads recorded data at sub-management numbers 4001 to 5000 at the program management nubmer 0 in the recorded data table 161 (Block 502, YES). The MPU 101 performs the second decryption processing on the recorded data at sub-management numbers 4001 to 5000 (Block 503). Since the item of incomplete-decryption-processing start address 2 is "4001" and the item of incomplete-decryption-processing end address 2 is "5000", the MPU 101 determines that the first decryption processing is incomplete for recorded data at sub-management numbers 4001 to 5000 (Block 504, YES).

The MPU 101 performs the first decryption processing on recorded data at sub-management numbers 4001 to 5000, which has been subjected to the second decryption processing, by referring to the item of decryption processing information (Block 505). The MPU 101 performs the second encryption processing on the recorded data subjected to the first decryption processing, and stores the recorded data at items at sub-management numbers 4001 to 5000. The MPU 101 stores "0" at items of incomplete-decryption-processing start address 2 and incomplete-decryption-processing end address 2 in the recorded data table 161. Further, the MPU 101 stores "1" obtained by reducing one from "2", at the item of decryption-processing division number (Block 506). Next, the MPU 101 reproduces recorded data at sub-management numbers 4001 to 5000, and displays the recorded data on the display device 13 (Block 507).

A description will now be made of a case that the MPU 101 reads recorded data at sub-management numbers 6001 to 7000 at the program management nubmer 0 in the recorded data table 161 (Block 502, YES). The MPU 101 performs the second decryption processing on the recorded data at sub-management numbers 6001 to 7000 (Block 503). Since the item of incomplete-decryption-processing start address 3 is "6001" and the item of incomplete-decryption-processing end address 3 is "7000", the MPU 101 determines that the first decryption processing is incomplete for recorded data at sub-management numbers 6001 to 7000 (Block 504, YES).

The MPU 101 performs the first decryption processing on recorded data at sub-management numbers 6001 to 7000, which has been subjected to the second decryption processing, by referring to the item of decryption processing information (Block 505). The MPU 101 performs the second encryption processing on the recorded data subjected to the first decryption processing, and stores the recorded data at items at sub-management numbers 6001 to 7000. The MPU 101 stores "0" at items of incomplete-decryption-processing start address 3 and incomplete-decryption-processing end address 3 in the recorded data table 161. Further, the MPU 101 stores "0" obtained by reducing one from "1", at the item of decryption-processing division number (Block 506). Next, the MPU 101 reproduces recorded data at sub-management numbers 6001 to 7000, and displays the recorded data on the display device 13 (Block 507).

According to the second embodiment, when recorded data for which the first decryption processing is incomplete is subjected to the reproducing processing, the control device 10 rerecords the recorded data into the recorded data table 161 after performing the first decryption processing. Therefore, when the rerecorded data is subjected to the producing processing for the next time, the control device 10 does not require the first decryption processing and can therefore reduce processing load in the reproducing processing. Therefore, failures can be avoided even when the control device 10 performs a receiving processsing or a recording processing at the same time when performing a reproducing processing.

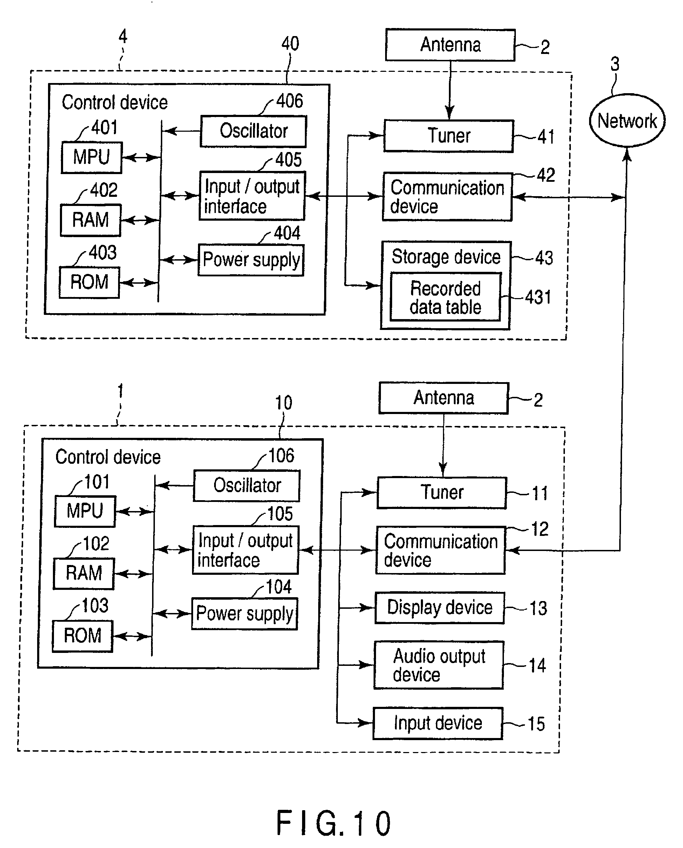

Next, the third embodiment will be described. FIG. 10 is a block diagram representing the entire ocnfiguration of a system comprising the signal processing device 1 according to the second embodiment. The same parts as those in the configuration described in the first embodiment will be denoted at the same reference symbols in the first embodiment, and descriptions thereof will be omitted herefrom. The signal processing device 1 has a configuration derived by removing the storage device 43 from the first embodiment as represented in FIG. 1.

A signal processing device 4 comprises a control device 40, a tuner 41, a communication device 42, and a storage device 43. The storage device 43 comprises a recorded data table 431. The control device 40 comprises a MPU 401, a RAM 402, a ROM 403, a power supply 404, an input/output interface 405, and an oscillator 406. The control device 40, tuner 41, communication device 42, storage device 43, and recorded data table 431 respectively have the same configurations as the control device 10, tuner 11, communication device 12, storage device 16, and recorded data table 161. The MPU 401, RAM 402, ROM 403, power supply 404, input/output interface 405, and oscillator 406 respectively have the same configurations as the MPU 101, RAM 102, ROM 103, power supply 104, input/output interface 105, and oscillator 106. Here, the signal processing device 4 will be described as a configuration comprising the storage device 43. However, these components may be connected as external devices.

The communication device 12 in the signal processing device 1 is connected to the communication device 42 in the signal processing device 4 through a network 3. The control device 10 in the signal processing device 1 controls the entire system including the signal processing device 4. The control device 40 in the signal processing device 4 performs a sub-control under control of the control device 10 in the signal processing device 1. That is, the control device 10 is a main control device including the signal processing device 1, and the control device 40 is a sub-control device.

The MPU 101 in the control device 10 operates according to a main control program as a module which controls the entire system stored in the ROM 103. The MPU 401 in the control device 40 operates according to a sub-control program stored in the ROM 403 in coorperation with the main control program. When the main control program is started up, the MPU 101 then initializes devices, such as the tuner 11, the commucation device 12, the display device 13, an audio output device 14, and an input device 15, which are connected to the control device 10. When the sub-control program is started up, the MPU 401 then initializes devices, such as the tuner 41, communication device 42, and storage device 43, which are connectd to the control device 40.

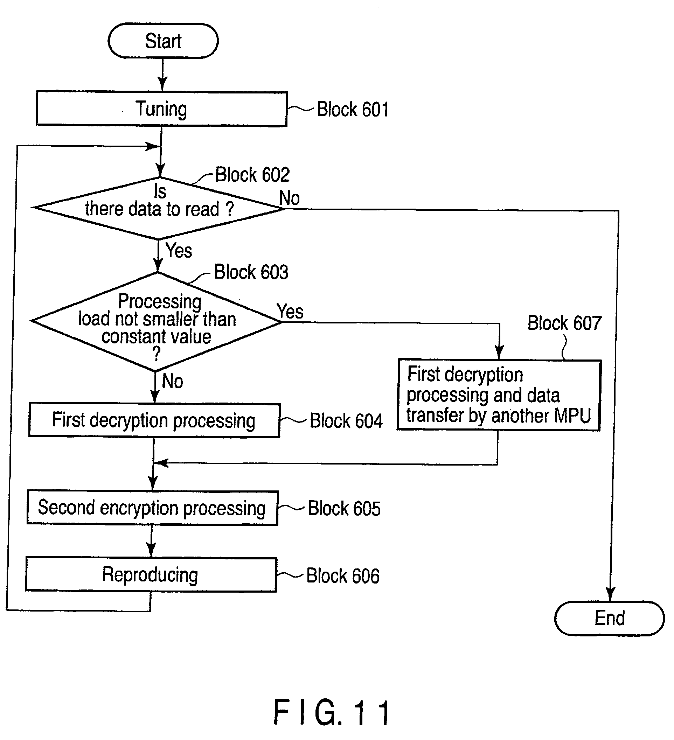

The third embodiment comprises a recording processing different from that in the first embodiment. The other processings are the same as in the first embodiment, and descriptions thereof will therefore be omitted herefrom. FIG. 11 is a flowchart representng a reproducing processing according to the third embodiment. Block 601, 602, 603, 604, 605, and 606 respectively operate in the same manners as Block 301, 302, 303, 304, 305, and 307, and descriptions thereof will be therefore omitted herefrom.

In the third embodiment, the MPU 401 in the control device 40 performs a recording processing in accordance with a sub-control program. A description will now be made of a case that the MPU 401 reads broadcast data of packets 1 to 1000 (Block 602, YES). If the MPU 401 determines that the usage rate of the MPU 401 is smaller than a constant value (40%) (Block 603, NO), the MPU 401 performs the first decryption processing on broadcast data of 1000 packets (Block 604). Next, the MPU 401 performs the second encryption processing on the broadcast data of packets 1 to 1000 subjected to the first encryption processing (Block 605). The MPU 401 stores, as recorded data, the broadcast data subjected to the second encryption processing at items at sub-management numbers 1 to 1000 in the recorded data table 431 (Block 606). The MPU 101 returns to Block 602, and reads broadcast data of packets 1001 to 2000.

Next, a desription will be made of a case that the MPU 401 reads broadcast data of packets 1001 to 2000 (Block 602, YES). If the MPU 401 determines that the usage rate of the MPU 401 is 50% which is not smaller than a constant value (40%) (Block 603, YES), the MPU 401 transfers, to the control device 10 through the communication devices 42 and 12, broadcast data of packets 1001 to 2000 and information instructing about execution of the first decryption processing on the broadcast data. The communication device 42 functions as a tarnsmitter. The MPU 101 in the control device 10 performs the first decryption processing on the broadcast data of packets 1001 to 2000. The MPU 101 functions as a decryption module. Further, the MPU 101 transfers, to the control device 40 through the commucation devices 12 and 42, the broadcast data of packets 1 to 1000 subjected to the first decryption processing (Block 607). The commucation device 12 functions as a transmitter.

Next, the MPU 401 performs the second encryption processing on the broadcast data of packets 1 to 1000 subjecgted to the first decryption processing (Block 605). The MPU 401 stores, as recorded data, the broadcast data subjected to the second encryption processing, at items at sub-management numbers 1001 to 2000 in the recorded data table 431 (Block 606). The MPU 401 returns to Block 602 and then repeats the recording processing.

In Block 607 in FIG. 11, the MPU 101 transfers broadcast data subjected to the first decryption processing, to the control device 40. However, the broadcast data may be transferred to the control device 40 after performing the second encryption processing on the broadcast data subjected to the first decryption processing.

According to the third embodiment, when the control device 40 simultaneously receives one or more items of broadcast data during the recording processing, the first decryption processing is performed on the broadcast data, to adapt to processing load of the control device 40. Therefore, regions of the broadcast data which are not subjected to the first decryption processing decrease. Also, the control device 40 can reduce the processing load in the recording processing, and therefore, failures in the receiving processing or recording processing can be avoided.

In the above embodiemnts, the signal processing device 1 (or 4) performs the first decryption processing so as to adapt to the processing load of the MPU 101 (or 401). However, the first decryption processing may be performed so as to adapt to the processing load and memory usage of the storage device 16 (or 46).

In the above embodiments, the signal processing device 1 (or 4) performs the first decryption processing so as to adapt to the processing load of the MPU 101 (or 401). However, regardless of the processing load of the signal processing device 1 (or 4), all-decryption-processing complete information may be stored into the recorded data table 161 (or 431) without performing the first decryption processing.

In the above embodiments, the signal processing device 1 (or 4) performs the first decryption processing so as to adapt to processing load of the MPU 101 (or 401) during reproducing processing. However, the first decryption processing may be performed when transfering recorded data (MOVE/UPLOAD/COPY).

The above embodiments define a format of the recorded data table 161. However, the format is not limited to this one. Distinguishing whether each attraibute is encrypted or not encrypted is not limited to this format.

In the above embodiments, the signal processing device 1 (or 4) performs the second encryption processing on recorded data during a recording processing regardless of processing load of the MPU 101 (or 401), and the second decryption processing is performed during a reproducing processing. However, recorded data may be subjected to neither the second encryption processing in the recording processing nor the second decryption processing in the reproducing processing of recorded data.

In the above embodiments, the signal processing device 1 (or 4) performs the first decryption processing on broadcast data during the recording or reproducing processing. However, when the processing load of the MPU 101 (or 401) is low, recorded data for which the first decryption processing is incomplete may be subjected to the first decryption processing and rerecorded, by referring to the recorded data table 161 (or 431).

Although the above embodiemnts use the tuner 11 (or 41), broadcast data may be received without using a tuner for IPTV.

In the third embodiemnt, when processing load of the MPU 401 is high, a local encryption processing may be performed on broadcast data by one signal processing device 4, and the second encryption processing may be performed on broadcast data by the other signal processing device 1, to reduce the processing load of the MPU 401.

In the third embodiment, the control devices 10 and 20 are connected through the communication devices 12 and 42. Connection therebetween is not limited to this connection method but may be made through a local bus.

## Claims

1. A signal processing device (1), comprising:
an obtaining module (11) configured to obtain first broadcast data encrypted by a first encryption processing;
a measurement module (1011) configured to measure the processing load of the signal processing device during a recording processing of said obtained first broadcast data;
a first determination module (101) configured to determine whether decryption is to be performed by a first decryption processing, for each region of the first broadcast data, on the basis of the processing load; and
a first decryption module (101) configured to generate second broadcast data consisting in at least a decrypted region decrypted by the first decryption processing, if the first determination module (101) determines that at least a region of the first broadcast data is to be decrypted by the first decryption processing;
**characterized by**
an encryption module (101) configured to generate data to be recorded by encrypting the first broadcast data by a second encryption processing if the first decryption module does not generate the second broadcast data, or by encrypting the second broadcast data by the second encryption processing if the first decryption module (101) generates the second broadcast data; and
a memory (16) configured to record the data generated by the second encryption processing, information concerning the first decryption processing, and division information indicating division between regions decrypted by the first decryption processing and regions not decrypted by said first decryption processing.

2. The device (1) of claim 1, wherein:
the first determination module (101) determines that a target processing region in the first broadcast data is the region to be decrypted if the processing load is smaller than a constant value during the recording processing on the target processing region.

3. The device (1) of claim 1, further comprising:
a second decryption module (101) configured to decrypt the recorded data generated by the second encryption processing, on the basis of an input in a reproducing processing on the recorded data;
a second determination module (101) configured to determine whether there is a region not decrypted by the first decryption processing in the recorded data or not, by referring to the division information; and
a reproducing module (101) configured to reproduce the recorded data, by decrypting the non-decrypted region by the first decryption processing, if the second determination module (101) determines that there is such a non-decrypted region.

4. The device (1) of claim 3, wherein:
the encryption module (101) encrypts a region decrypted by the first decryption processing in the recording processing, by the second encryption processing, and the memory (16) records, as a decrypted region, said region further encrypted by the second encryption processing in the recording processing.

5. The device (1) of claim 4, wherein:
the memory (16) updates and stores the division information.

6. A signal processing method, comprising:
obtaining first broadcast data encrypted by a first encryption processing (Block 301);
measuring the processing load of the signal processing device during a recording processing of said obtained first broadcast data (Block 302);
determining whether decryption is to be performed by a first decryption processing for each region of the first broadcast data, on the basis of the processing load (Block 303); and
generating second broadcast data consisting in at least a decrypted region decrypted by the first decryption processing, if a determination is made that at least a region of the first broadcast data is to be decrypted by the first decryption processing (Block 304);
**characterized by**
generating data to be recorded by encrypting the first broadcast data by a second encryption processing if the second broadcast data are not generated, or by encrypting the second broadcast data by the second encryption processing if the second broadcast data are generated (Block 305) ; and
recording the data generated by the second encryption processing, information concerning the first decryption processing, and division information indicating division between regions decrypted by the first decryption processing and regions not decrypted by said first decryption processing (Block 307).

## Patentansprüche

1. Signalverarbeitungsvorrichtung (1) mit:
einem Gewinnungsmodul (11), das ausgestaltet ist, erste Rundfunkdaten zu gewinnen, die mit einer ersten Verschlüsselungsverarbeitung verschlüsselt sind;
einem Messmodul (1011), das ausgestaltet ist, um die Verarbeitungslast der Signalverarbeitungsvorrichtung während eines Aufzeichnungsprozesses der gewonnenen ersten Rundfunkdaten zu messen;
einem ersten Bestimmungsmodul (101), das ausgestaltet ist, um beruhend auf der Verarbeitungslast zu bestimmen, ob eine Entschlüsselung durch eine erste Entschlüsselungsverarbeitung für jeden Bereich der ersten Rundfunkdaten durchzuführen ist; und
einem ersten Entschlüsselungsmodul (101), das ausgestaltet ist, um zweite Rundfunkdaten zu erzeugen, die zumindest aus dem entschlüsselten Bereich bestehen, der von der ersten Entschlüsselungsverarbeitung entschlüsselt wurde, wenn das erste Bestimmungsmodul (101) bestimmt, dass zumindest ein Teil der ersten Rundfunkdaten durch die erste Verschlüsselungsverarbeitung zu entschlüsseln ist;
**gekennzeichnet durch**
ein Verschlüsselungsmodul (101), das ausgestaltet ist, um aufzuzeichnende Daten **durch** Verschlüsselung der ersten Rundfunkdaten **durch** eine zweite Verschlüsselungsverarbeitung zu erzeugen, wenn das erste Entschlüsselungsmodul keine zweiten Rundfunkdaten erzeugt, oder **durch** Verschlüsseln der zweiten Rundfunkdaten **durch** die zweite Verschlüsselungsverarbeitung, wenn das erste Entschlüsselungsmodul (101) zweite Rundfunkdaten erzeugt; und
einen Speicher (16), der ausgestaltet ist, um die Daten, die von der zweiten Verschlüsselungsverarbeitung erzeugt wurden, Information bezüglich der ersten Entschlüsselungsverarbeitung und Teilungsinformation, die die Teilung zwischen den Bereichen, die von dem ersten Entschlüsselungsverarbeitung entschlüsselt wurden, und den Bereichen, die nicht von der ersten Entschlüsselungsverarbeitung entschlüsselt wurden, anzeigt, aufzuzeichnen.

2. Vorrichtung (1) nach Anspruch 1, bei der:
das erste Bestimmungsmodul (101) bestimmt, dass ein Zielverarbeitungsbereich in den ersten Rundfunkdaten der Bereich ist, der zu entschlüsseln ist, wenn die Verarbeitungslast während der Aufzeichnungsverarbeitung in dem Zielverarbeitungsbereich kleiner als ein konstanter Wert ist.

3. Vorrichtung (1) nach Anspruch 1, des Weiteren mit:
einem zweiten Entschlüsselungsmodul (101), das ausgestaltet ist, um die aufgezeichneten Daten zu entschlüsseln, die von der zweiten Verschlüsselungsverarbeitung erzeugt wurden, beruhend auf der Eingabe der aufgezeichneten Daten in der Wiedergabeverarbeitung;
einem zweiten Bestimmungsmodul (101), das ausgestaltet ist, um zu bestimmen, ob es in den aufgezeichneten Daten einen Bereich gibt, der nicht von der ersten Entschlüsselungsverarbeitung entschlüsselt wurde, indem auf die Teilungsinformation Bezug genommen wird; und
einem Wiedergabemodul (101), das ausgestaltet ist, die aufgezeichneten Daten wiederzugeben, durch Entschlüsseln des nicht verschlüsselten Bereiches durch die erste Entschlüsselungsverarbeitung, wenn das zweite Bestimmungsmodul (101) bestimmt, dass es einen solchen nicht verschlüsselten Bereich gibt.

4. Vorrichtung (1) nach Anspruch 3, bei dem:
das Verschlüsselungsmodul (101) einen Bereich verschlüsselt, der von der ersten Entschlüsselungsverarbeitung in der Aufzeichnungsverarbeitung entschlüsselt wurde, mittels der zweiten Verschlüsselungsverarbeitung, und wobei der Speicher als verschlüsselten Bereich, den Bereich aufzeichnet, der des Weiteren durch die zweite Verschlüsselungsverarbeitung in der Aufzeichnungsverarbeitung verschlüsselt wurde.

5. Vorrichtung (1) nach Anspruch 4, bei der:
der Speicher (16) die Teilungsinformation auffrischt und speichert.

6. Signalverarbeitungsverfahren mit:
Erhalten erster Rundfunkdaten, die durch eine erste Verschlüsselungsverarbeitung verschlüsselt sind (Block 301);
Messen der Verarbeitungslast der Signalverarbeitungsvorrichtung während der Aufzeichnungsverarbeitung der gewonnenen ersten Rundfunkdaten (Block 302);
Bestimmen, ob eine Entschlüsselung mittels einer ersten Entschlüsselungsverarbeitung für jeden Bereich der ersten Rundfunkdaten auszuführen ist, beruhend auf der Verarbeitungslast (Block 303); und
Erzeugen zweiter Rundfunkdaten, die zumindest aus einem entschlüsselten Bereich, der durch die erste Entschlüsselungsverarbeitung entschlüsselt wurde, besteht, wenn bestimmt wurde, dass zumindest ein Bereich der ersten Rundfunkdaten durch die erste Entschlüsselungsverarbeitung zu entschlüsseln ist (Block 304);
**gekennzeichnet durch**
Erzeugen von Daten, die aufzuzeichnen sind, **durch** Verschlüsseln der ersten Rundfunkdaten **durch** eine zweite Verschlüsselungsverarbeitung, wenn die zweiten Rundfunkdaten nicht erzeugt werden, oder **durch** Verschlüsseln der zweiten Rundfunkdaten **durch** die zweite Verschlüsselungsverarbeitung, wenn zweite Rundfunkdaten erzeugt werden (Block 305); und
Aufzeichnen der Daten, die von dem zweiten Verschlüsselungsverarbeitung erzeugt wurden, von Information bezüglich der ersten Entschlüsselungsverarbeitung, und von Teilungsinformationen, die die Teilung zwischen Bereichen, die **durch** die erste Entschlüsselungsverarbeitung entschlüsselt sind, und Bereichen, die nicht **durch** die erste Entschlüsselungsverarbeitung entschlüsselt sind, anzeigt.

## Revendications

1. Dispositif de traitement de signal (1), comprenant :
un module d'obtention (11) configuré pour obtenir des premières données de diffusion chiffrées par un premier traitement de chiffrement ;
un module de mesure (1011) configuré pour mesurer la charge de traitement du dispositif de traitement de signal pendant un traitement d'enregistrement desdites premières données de diffusion obtenues ;
un premier module de détermination (101) configuré pour déterminer si un déchiffrement doit être effectué par un premier traitement de déchiffrement, pour chaque région des premières données de diffusion, sur la base de la charge de traitement ; et
un premier module de déchiffrement (101) configuré pour générer des deuxièmes données de diffusion consistant en au moins une région déchiffrée qui est déchiffrée par le premier traitement de déchiffrement, si le premier module de détermination (101) détermine qu'au moins une région des premières données de diffusion doit être déchiffrée par le premier traitement de déchiffrement ;
**caractérisé par**
un module de chiffrement (101) configuré pour générer des données à enregistrer en chiffrant les premières données de diffusion par un deuxième traitement de chiffrement si le premier module de déchiffrement ne génère pas les deuxièmes données de diffusion, ou en chiffrant les deuxièmes données de diffusion par le deuxième traitement de chiffrement si le premier module de déchiffrement (101) génère les deuxièmes données de diffusion ; et
une mémoire (16) configurée pour enregistrer les données générées par le deuxième traitement de chiffrement, des informations concernant le premier traitement de déchiffrement, et des informations de division indiquant une division entre les régions déchiffrées par le premier traitement de déchiffrement et les régions qui ne sont pas déchiffrées par ledit premier traitement de déchiffrement.

2. Dispositif (1) selon la revendication 1, dans lequel :
le premier module de détermination (101) détermine qu'une région de traitement cible dans les premières données de diffusion est la région à déchiffrer si la charge de traitement est inférieure à une valeur constante pendant le traitement d'enregistrement sur la région de traitement cible.

3. Dispositif (1) selon la revendication 1, comprenant en outre :
un deuxième module de déchiffrement (101) configuré pour déchiffrer les données enregistrées générées par le deuxième traitement de chiffrement, sur la base d'une entrée dans un traitement de reproduction sur les données enregistrées ;
un deuxième module de détermination (101) configuré pour déterminer s'il y a ou non une région qui n'est pas déchiffrée par le premier traitement de déchiffrement dans les données enregistrées, en se référant aux informations de division ; et
un module de reproduction (101) configuré pour reproduire les données enregistrées, en déchiffrant la région non déchiffrée par le premier traitement de déchiffrement, si le deuxième module de détermination (101) détermine qu'il y a une telle région non déchiffrée.

4. Dispositif (1) selon la revendication 3, dans lequel :
le module de chiffrement (101) chiffre une région déchiffrée par le premier traitement de déchiffrement dans le traitement d'enregistrement, par le deuxième traitement de chiffrement, et la mémoire (16) enregistre, en tant que région déchiffrée, ladite région chiffrée en outre par le deuxième traitement de chiffrement dans le traitement d'enregistrement.

5. Dispositif (1) selon la revendication 4, dans lequel :
la mémoire (16) met à jour et mémorise les informations de division.

6. Procédé de traitement de signal, consistant à :
obtenir des premières données de diffusion chiffrées par un premier traitement de chiffrement (bloc 301) ;
mesurer la charge de traitement du dispositif de traitement de signal pendant un traitement d'enregistrement desdites premières données de diffusion obtenues (bloc 302) ;
déterminer si un déchiffrement doit être effectué par un premier traitement de déchiffrement pour chaque région des premières données de diffusion, sur la base de la charge de traitement (bloc 303) ; et
générer des deuxièmes données de diffusion consistant en au moins une région déchiffrée qui est déchiffrée par le premier traitement de déchiffrement, s'il est déterminé qu'au moins une région des premières données de diffusion doit être déchiffrée par le premier traitement de déchiffrement (bloc 304) ;
**caractérisé par**
la génération de données à enregistrer en chiffrant les premières données de diffusion par un deuxième traitement de chiffrement si les deuxièmes données de diffusion ne sont pas générées, ou en chiffrant les deuxièmes données de diffusion par le deuxième traitement de chiffrement si les deuxièmes données de diffusion sont générées (bloc 305) ; et
l'enregistrement des données générées par le deuxième traitement de chiffrement, des informations concernant le premier traitement de déchiffrement, et des informations de division indiquant une division entre les régions déchiffrées par le premier traitement de déchiffrement et les régions qui ne sont pas déchiffrées par ledit premier traitement de déchiffrement (bloc 307).
